# EUROPEAN PATENT SPECIFICATION

(11) **EP 2 216 162 B1**
(45) Date of publication and mention of the grant of the patent: **08.07.2015**
(21) Application number: 10152045.0
(22) Date of filing: 29.01.2010
(51) Int. Cl.: B29C 65/52, D06H 5/00

(54) **Cloth bonding apparatus**
Vorrichtung zum Verbinden vom Stoff
Appareil de liaison de tissus

(30) Priority: 04.02.2009 JP 2009023227
(43) Date of publication of application: 11.08.2010
(73) Proprietor: Brother Kogyo Kabushiki Kaisha, Nagoya-shi, Aichi 467-8561 (JP)
(72) Inventor: Iwakoshi, Hiroyasu, Nagoya-shi Aichi 467-8562 (JP); Umeda, Kazutoshi, Nagoya-shi Aichi 467-8562 (JP); Yamaura, Hiroki, Nagoya-shi Aichi 467-8562 (JP); Yoshimoto, Naoki, Nagoya-shi Aichi 467-8562 (JP); Ohmura, Yoshikazu, Nagoya-shi Aichi 467-8562 (JP)
(74) Representative: Prüfer & Partner GbR European Patent Attorneys

(56) References cited:
- WO-A1-01/89812
- WO-A1-97/07697
- WO-A1-99/46110
- GB-A- 1 562 562
- JP-A- 7 070 807
- US-A- 2 142 733
- US-A- 2 664 938
- US-A- 4 602 975

## Description

The present invention relates to a cloth bonding apparatus. More specifically, the invention relates to a cloth bonding apparatus that bonds cloths with a hot-melt adhesive.

A bonding apparatus is directed for bonding cloths with an adhesive, instead of sewing the cloths with a needle and a thread. By bonding the cloths with the adhesive, the bonding apparatus can eliminate unevenness due to the thread that may be formed in the cloth surfaces when the cloths are sewn with the thread. The cloth surfaces processed by the bonding apparatus are smooth. Thus, the bonding apparatus is capable of manufacturing nice and soft clothes, and the like.

The following is a work procedure using the conventional bonding apparatus. A worker attaches a tape on which a thermoplastic adhesive is applied on a cloth. Next, the worker peels off a release paper of the tape. The adhesive is thus applied on the cloth. The worker then lays another cloth on top of the cloth on which the adhesive has been applied. The bonding apparatus applies heat and press the cloths together. Though this procedure, the cloths may be bonded together.

There are other methods and bonding apparatuses that may considerably reduce the number of the above-described bonding steps. For example, with the bonding apparatus described in Japanese Patent Application Laid-Open Publication JP-7-70807, a liquid adhesive is discharged from a nozzle directly onto a cloth. The adhesive adheres on the cloth. The bonding apparatus then applies pressure and heat to cloths between which the adhesive has been applied from the outer surfaces. The cloths are thus bonded together. The steps of attaching a tape, heating the tape, and removing the release paper of the tape, which were necessary in the above-described bonding method, may not be required. Accordingly, productivity can be improved.

### SUMMARY

The adhesive employed in the bonding apparatus described in the publication needs time to set (solidify). Accordingly, the bonded cloths may be left until the adhesive sets. Therefore, the worker who uses the bonding apparatus described above can not perform other work until the adhesive sets.

WO 01/89812 A1 discloses a generic cloth bonding apparatus comprising a nozzle that has a discharge port from which an adhesive is dischargeable onto a first layer of cloth; a feeding portion adapted to press and feed the first layer of cloth with a second layer of cloth in a direction intersecting with a direction in which the adhesive is discharged from the nozzle; a channel through which the adhesive can be supplied to the nozzle; a first heating portion that heats the channel; and a temperature controlling portion that controls a heating temperature of the first heating portion.

Other cloth bonding apparatuses are known from WO 97/07697 A1; WO 99/46110 A1, US 4,602,975 A; US 2,142,733 A; and US 2,664,938 A. A hot melt thermoplastic adhesive foam system is known from GB 1 562 562 A.

An object of the present invention is to provide a cloth bonding apparatus that improves the cloth's quality and also reduces time for bonding the cloth to increase productivity.

A cloth bonding apparatus according to the present invention includes a nozzle that has a discharge port from which an adhesive is dischargeable onto a first layer of cloth, a feeding portion adapted to press and feed the first layer of cloth with a second layer of cloth in a direction intersecting with a direction in which the adhesive is discharged from the nozzle, a channel through which the adhesive can be supplied to the nozzle, a first heating portion that heats the channel, and a temperature controlling portion that controls a heating temperature of the first heating portion. The cloth bonding apparatus heats the adhesive in the channel to an appropriate temperature with the first heating portion. The cloth bonding apparatus supplies the heated adhesive to the nozzle through the channel. The adhesive is discharged from the discharge port of the nozzle onto the first layer of cloth. Then, the feeding portion presses the first layer of cloth on which the adhesive has been applied with the second layer of cloth and bonds them together. Therefore, unlike the cloths sewn with a thread, the cloth surfaces do not have unevenness that may be formed by the thread. The cloth bonding apparatus thus makes it possible for the first and second layers of cloth to have smooth surfaces.

The cloth bonding apparatus may further include a storage chamber adapted to store the adhesive to be supplied to the channel. In such a case, the cloth bonding apparatus can supply the adhesive from the storage chamber to the nozzle through the channel.

The cloth bonding apparatus may further include a second heating portion that heats the storage chamber, and the temperature controlling portion may control a heating temperature of the first heating portion and the second heating portion. In such a case, the cloth bonding apparatus can store the adhesive with some fluidity in the storage chamber. Therefore the cloth bonding apparatus can supply the adhesive quickly to the channel.

The cloth bonding apparatus may further include a temperature sensor that is capable of detecting a temperature of the adhesive, and the temperature controlling portion may control the heating temperature of the first heating portion based on the temperature detected by the temperature sensor. In such a case, the cloth bonding apparatus can control the heating temperature of the adhesive in the channel based on the temperature detected by the temperature sensor.

The cloth bonding apparatus may further include a temperature sensor that is capable of detecting a temperature of the adhesive, and the temperature controlling portion may control the heating temperature of the first heating portion and the heating temperature of the second heating portion based on the temperature detected by the temperature sensor. In such a case, the cloth bonding apparatus can control the heating temperature of the adhesive in the channel and in the storage chamber based on the temperature detected by the temperature sensor.

The cloth bonding apparatus further includes a moving portion that moves the nozzle between a use position and a maintenance position, the use position is nearer to the feeding portion than the maintenance position. In such a case, the cloth bonding apparatus can move the nozzle to the use position when bonding the cloth, and move the nozzle to the maintenance position when the maintenance work is done. Therefore, the worker can easily switch between the cloth bonding operation and the maintenance work. In the cloth bonding apparatus, during maintenance, the nozzle may be moved to the position away from the feeding portion. Then, the worker can easily carry out the maintenance work for checking the condition of the nozzle.

In the cloth bonding apparatus, the discharge port may face a worker in a state where the nozzle has been moved to the maintenance position by the moving portion. In such a case, the worker can look at the discharge port and check the discharge port easily.

The cloth bonding apparatus further includes a supplying portion adapted to supply the adhesive to the channel, a supply controlling portion that controls a drive of the supplying portion, and a position detecting portion that detects a position of the nozzle. The supply controlling portion controls the supplying portion to stop a supply of the adhesive if the position detecting portion has detected that the nozzle is at the maintenance position, and controls the supplying portion to permit the supply of the adhesive if the position detecting portion has detected that the nozzle is at the use position. In such a case, the cloth bonding apparatus can execute control such that the adhesive is discharged only when the nozzle is at the use position. In other words, the cloth bonding apparatus can prevent the adhesive from being discharged when the nozzle is at the maintenance position.

The cloth bonding apparatus may further include a permitting portion that permits the supply of the adhesive by the supplying portion. The supply controlling portion may permit the supply of the adhesive by the supplying portion if the permitting portion has permitted the supply of the adhesive, even if the position detecting portion has detected that the nozzle is at the maintenance position. In such a case, the cloth bonding apparatus can discharge the adhesive from the nozzle in a state where the nozzle is at the maintenance position. Therefore, the cloth bonding apparatus can carry out maintenance work on the nozzle (such as purging) wherein the adhesive is discharged from the nozzle.

In the cloth bonding apparatus, the nozzle may be positioned at the feeding portion on an upstream side with respect to the feeding portion in a feed direction in which the feeding portion feeds the first layer of cloth with the second layer of cloth. In such a case, the cloth bonding apparatus can press and feed the cloths by the feeding portion soon after the adhesive is discharged onto the cloth. Therefore, the cloth bonding apparatus can reliably press a part of the first and second layers of cloth with the adhesive adhered thereto with the feeding portion to bond them together. The cloth bonding apparatus can thus be made smaller.

In the cloth bonding apparatus, the nozzle is adapted to extend along the first layer of cloth from a support portion that includes the channel. In such a case, the cloth bonding apparatus can prevent the first and second layers of cloth from being caught by the nozzle or support portion when the feeding portion feeds them and thus inhibiting the bonding operation. The support portion includes the channel through which the adhesive is supplied to the nozzle. Therefore, the cloth bonding apparatus can supply the adhesive to the nozzle through the support portion.

### BRIEF DESCRIPTION OF THE DRAWINGS

Exemplary embodiments of the present disclosure will be described below in detail with reference to the accompanying drawings in which:
Fig. 1 is an upper front perspective view of the entire cloth bonding apparatus 1;
Fig. 2 is an upper front perspective view of a bonding machine 2;
Fig. 3 is a front view of the bonding machine 2;
Fig. 4 is a left side view of the bonding machine 2 when a support portion 16 is at a use position;
Fig. 5 is a left side view of the bonding machine 2 when the support portion 16 is at a maintenance position;
Fig. 6 is an upper front perspective view of the internal configuration of the bonding machine 2;
Fig. 7 is a sectional view taken along line I-I of Fig. 2;
Fig. 8 is a sectional view taken along line II-II of Fig. 2;
Fig. 9 is a partially enlarged perspective view illustrating a nozzle 17 and a vicinity of the nozzle 17 during a bonding operation;
Fig. 10 is a left side view of the bonding machine 2 during the bonding operation;
Fig. 11 is a block diagram illustrating an electrical configuration of the cloth bonding apparatus 1;
Fig. 12 is a flow chart of temperature control processing;
Fig. 13 is a flow chart of supply control processing; and
Fig. 14 is a flow chart of the supply control processing in a modified embodiment.

### DETAILED DESCRIPTION OF EXEMPLARY EMBODIMENTS

A cloth bonding apparatus 1 according to a first embodiment of the present invention will be described below with reference to the drawings.

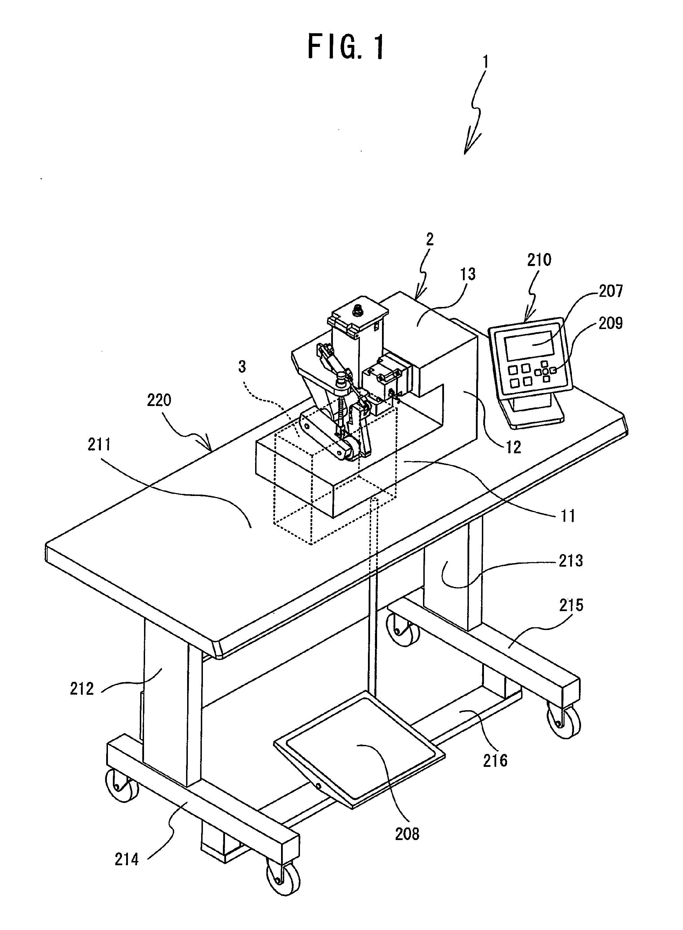

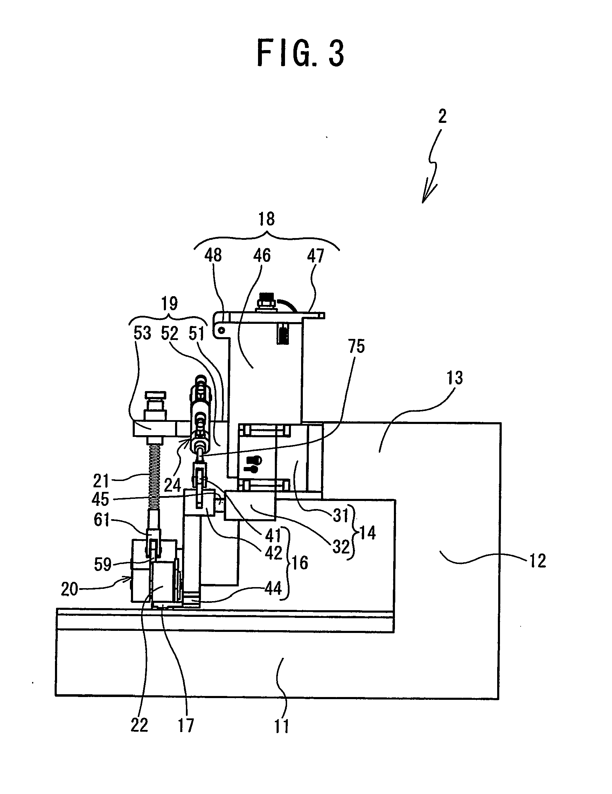

A configuration of the cloth bonding apparatus 1 will be described with reference to Figs. 1 to 4. In the following description, it is defined that the upper side, the lower side, the right side, the left side, the front face side, and the back face side of Fig. 3 are the upper side, the lower side, the right side, the left side, the front side, and the back side of a bonding machine 2, respectively.

An overall configuration of the cloth bonding apparatus 1 will be described with reference to Fig. 1. As shown in Fig. 1, the cloth bonding apparatus 1 includes a bonding machine 2 and a table 220. The bonding machine 2 is fixed to the table 220. The bonding machine 2 applies an adhesive between two layers of cloths arranged oppositely, and presses and feeds the cloths. The two layers of cloths are bonded together through the above operation of the bonding machine 2. A configuration of the bonding machine 2 will be described later in detail.

The table 220 includes a top board 211, left and right leg portions 212, 213, left and right support portions 214, 215, and a foot holder 216. The bonding machine 2 is fixed on the top board 211. The top board 211 has a rectangular plate shape in a plan view, with the right-and-left direction as its longitudinal direction. The length of the top board 211 in the right-and-left direction is about triple the length of the bonding machine 2 in the right-and-left direction. The length of the top board 211 in the back-and-forth direction is about twice the length of the bonding machine 2 in the back-and-forth direction.

The top board 211 has an operation panel 210 on the right side of a position where the bonding machine 2 is fixed. The operation panel 210 includes a liquid crystal display (LCD) portion 207 and a plurality of keys 209. The LCD portion 207 displays various items of information thereon. The keys 209 are directed for inputting various items of information. A worker may set various operations of the cloth bonding apparatus 1 by operating the keys 209 while looking at the LCD portion 207.

The left leg portion 212 having a plate shape extends vertically downwards from the left end of the top board 211, perpendicular to the upper face of the top board 211. The right leg portion 213 having a plate shape extends vertically downwards from the right end of the top board 211, perpendicular to the upper face of the top board 211. The left support portion 214 is connected to the lower end of the left leg portion 212. The right support portion 215 is connected to the lower end of the right leg portion 213. The left support portion 214 and the right support portion 215 each are substantially prismatic members with the back-and-forth direction as a longitudinal direction. The foot holder 216 having an elongated plate shape connects the left support portion 214 and the right support portion 215 substantially at the centers thereof in the back-and-forth direction. A pedal 208 is provided substantially at the center of the foot holder 216 in the right-and-left direction. The worker may use the pedal 208 to adjust a feed speed of the cloths.

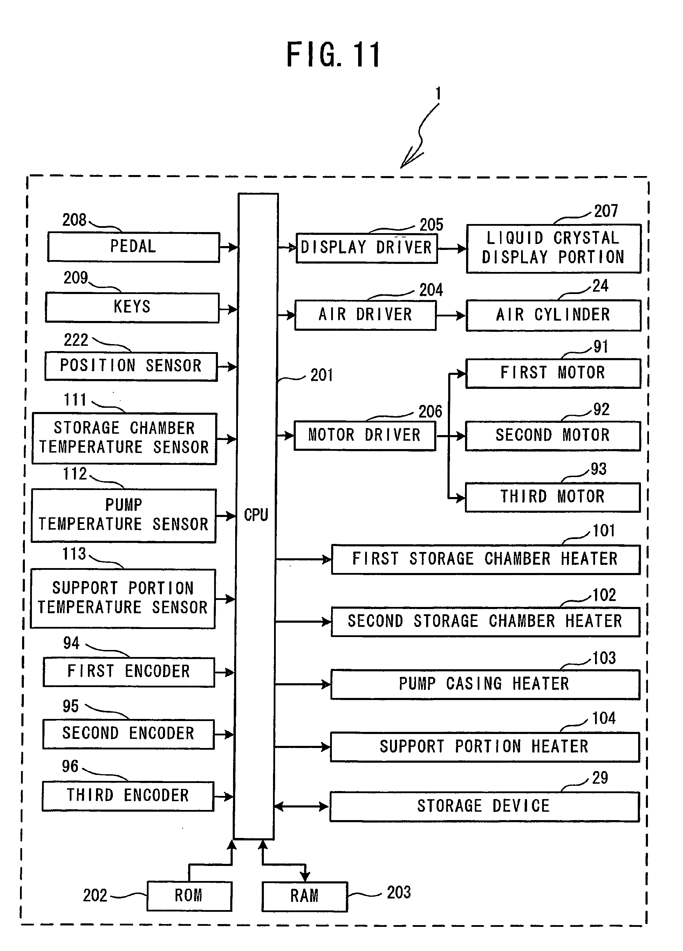

A control box 3 is fixed at the lower face of the top board 211. The control box 3 stores a control substrate having a CPU 201 (see Fig. 11) and the like mounted thereon. The control box 3 is electrically connected to the bonding machine 2, the operation panel 210, and the pedal 208.

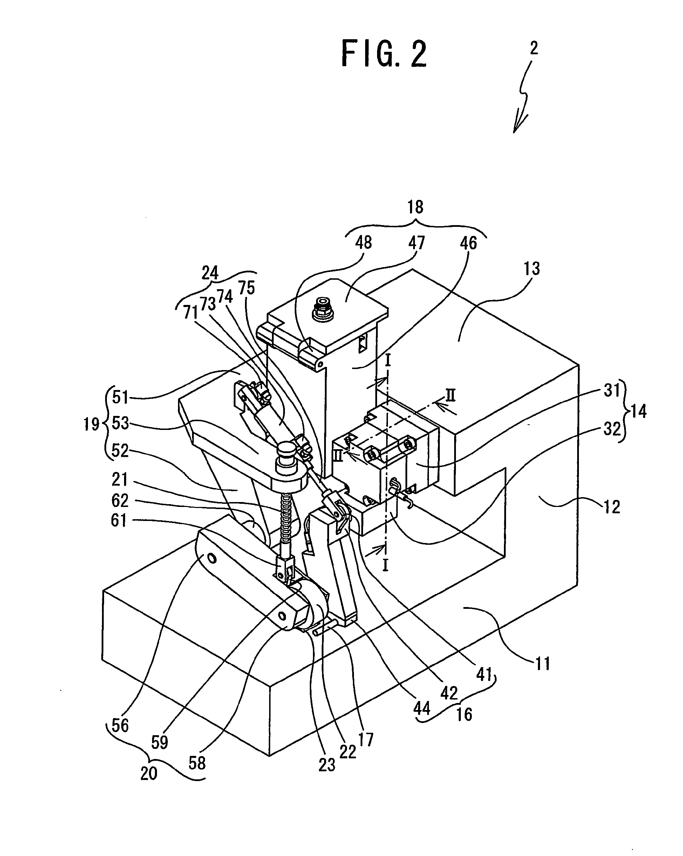

The configuration of the bonding machine 2 will be described with reference to Figs. 2 to 4. As shown in Figs. 2 and 3, the bonding machine 2 includes a bed portion 11, a pillar portion 12, and an arm portion 13. The bed portion 11 has a substantially rectangular parallelepiped shape with the right-and-left direction as the longitudinal direction. The bed portion 11 is fixed on the top board 211 (see Fig. 1). The pillar portion 12 extends vertically upwards from the right end of the bed portion 11. The arm portion 13 is connected to the upper end of the pillar portion 12 and extends leftward from the left side of the pillar portion 12. The length of the arm portion 13 in the right-and-left direction is about one third of the length of the bed portion 11 in the right-and-left direction.

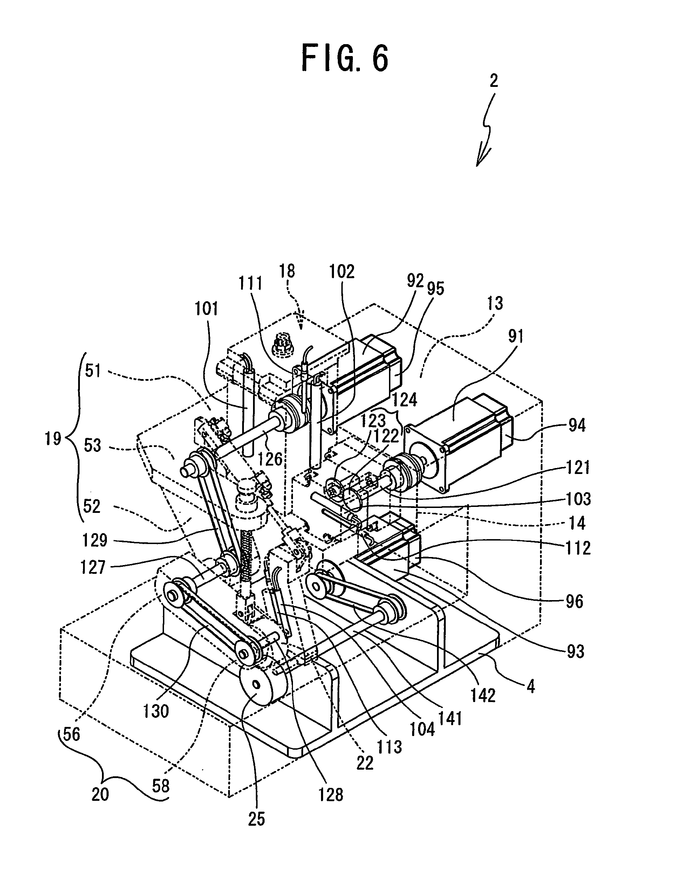

The bed portion 11 includes therein a lower feed roller 25 (see Fig. 6), a third motor 93 (see Fig. 6) and the like. The lower feed roller 25 presses and feeds cloths in conjunction with an upper feed roller 22, which will be described later. The third motor 93 drives the lower feed roller 25. The bed portion 11 functions as a base that supports the pillar portion 12. The pillar portion 12 supports the arm portion 13.

As shown in Fig. 2, the left end of the arm portion 13 supports a pump casing 14, a storage chamber 18, and a beam portion 19, from front to back in this order. The arm portion 13 includes therein a first motor 91 (see Fig. 6), a second motor 92 (see Fig. 6) and the like. The first motor 91 drives a gear pump 124 (see Fig. 6). The second motor 92 drives the upper feed roller 22.

The pump casing 14 will be described. As shown in Figs. 2 and 3, the pump casing 14 includes a first pump casing 31 and a second pump casing 32. The first pump casing 31 is a substantially cubic member. The first pump casing 31 is fixed on the left side face of the arm portion 13. The first pump casing 31 includes therein the gear pump 124 (see Fig. 6) and the like. The gear pump 124 supplies an appropriate amount of adhesive to the nozzle 17 with high accuracy. The second pump casing 32 is a substantially rectangular parallelepiped member. The second pump casing 32 extends downward from the left end portion of the lower face of the first pump casing 31. As shown in Fig. 3, the length of the first pump casing 31 in the vertical direction is substantially the same as the length of the arm portion 13 in the vertical direction. The position of the second pump casing 32 in the right-and-left direction is substantially the same as the center position of the bed portion 11 in the right-and-left direction.

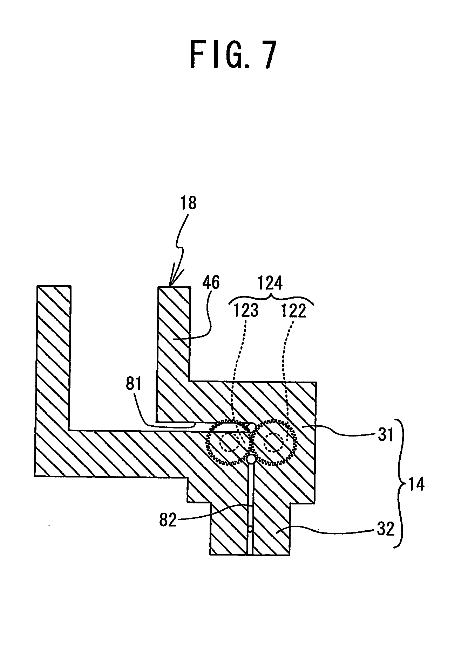

The second pump casing 32 includes a shaft portion 45 (see Fig. 3) on its left side. The shaft portion 45 is connected to the right side of the upper end portion 42 of a support portion 16 and swingably supports the support portion 16 about the shaft portion 45. The pump casing 14 includes a channel 81 (see Fig. 7) and a channel 82 (see Fig. 7), which will be described later. The channel 81 leads the adhesive from the storage chamber 18 to the gear pump 124. The channel 82 leads the adhesive from the gear pump 124 to the support portion 16.

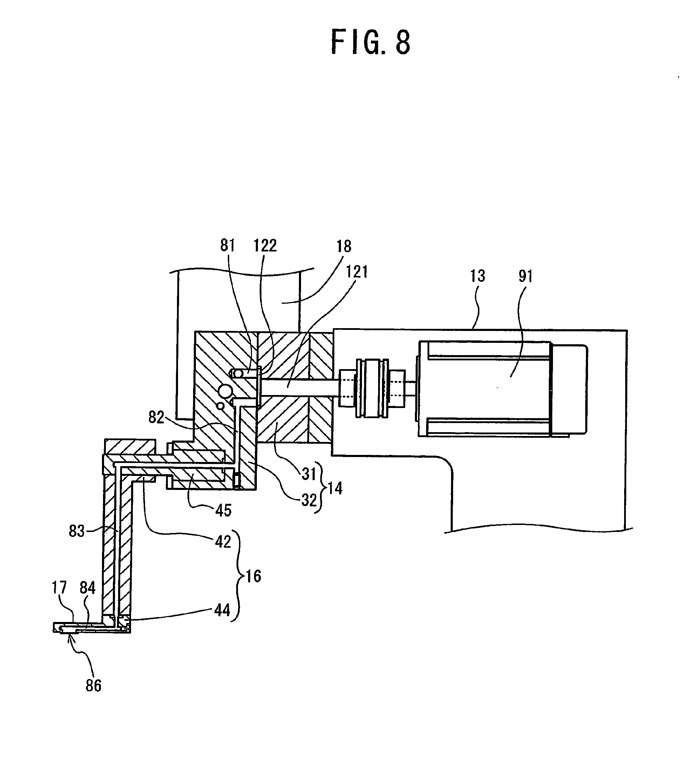

As shown in Figs. 2 and 3, the shape of the support portion 16 is substantially rectangular parallelepiped with the vertical direction as the longitudinal direction. A small gap is present between the lower end portion 44 of the support portion 16 and the bed portion 11. The support portion 16 includes therein a channel 83 (see Fig. 8). The channel 83 leads the adhesive from the pump casing 14 to the nozzle 17.
The support portion 16 includes the nozzle 17 at the lower end portion 44. The nozzle 17 extends leftward from the support portion 16 along the cloth surface. The support portion 16 includes a drive transmitting portion 41 at the upper end portion 42. The drive transmitting portion 41 supports an end portion of a movable portion 75 of an air cylinder 24.

The air cylinder 24 includes air inlet ports 71 and 74. An intake/exhaust hose (not shown) is connected to each of the air inlet ports 71 and 74. The cloth bonding apparatus 1 controls an intake and an exhaust of a compressed air through the air inlet ports 71 and 74. The position of a piston inside a body portion 73 of the air cylinder 24 moves in accordance with the intake and exhaust control. The movable portion 75 is connected to the piston. Thus, the end portion of the movable portion 75 moves back and forth along with the movement of the piston. The air cylinder 24 includes a position sensor 222 (see Fig. 11) in the body portion 73. As the position sensor 222, a magnetic sensor is employed. The magnetic sensor detects a magnetic body attached to a specified position of the piston.

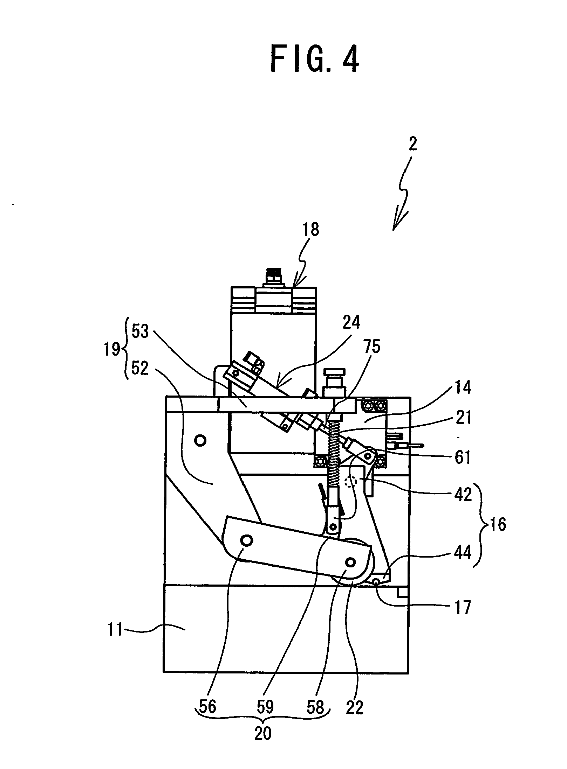

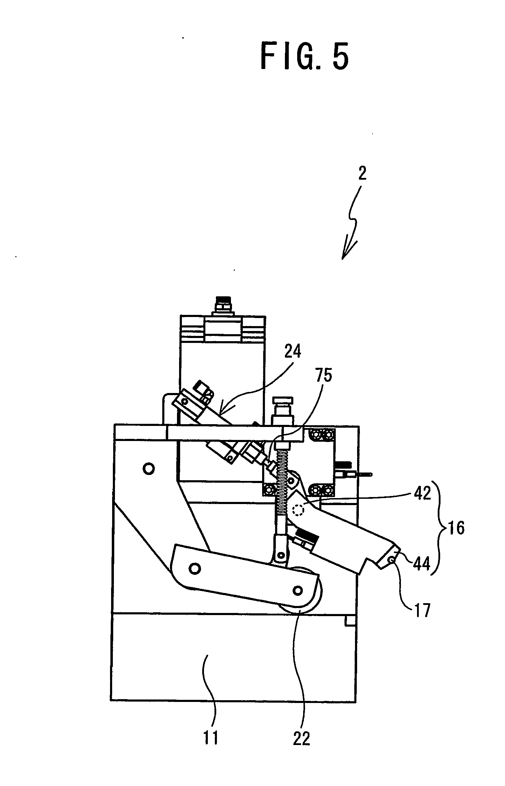

The support portion 16 swings back and forth about the shaft portion 45 along with the back-and-forth movement of the movable portion 75 of the air cylinder 24. The nozzle 17 moves along with the swing of the support portion 16 to a position where the cloth bonding work is performed (see Fig. 4) and to a position where maintenance is performed (see Fig. 5).

The nozzle 17 has a cylindrical shape. The nozzle 17 has a discharge port 86 (see Fig. 8) from which the adhesive is discharged at the bottom. When the worker performs the cloth bonding work, the discharge port 86 opposes the bed portion 11. When performing the bonding work, the worker inserts the nozzle 17 between the two layers of oppositely arranged cloths. The gear pump 124 supplies the adhesive to the nozzle 17 through the channel 83 provided inside the support portion 16. The nozzle 17 discharges the adhesive from the discharge port 86 onto the cloth. Consequently, the adhesive may be applied on the surface of the lower cloth positioned below the nozzle 17.

As shown in Figs. 2 and 3, the storage chamber 18 has a substantially rectangular parallelepiped shape with the vertical direction as the longitudinal direction. The storage chamber 18 extends upward from the left side of the arm portion 13 and from the back of the pump casing 14. The storage chamber 18 includes a body portion 46, a cover portion 47, and a cover shaft portion 48. The shape of the body portion 46 has a bottomed tube shape having an opening at the top. The cover portion 47 covers the opening at the top of the body portion 46.
The body portion 46 has the cover shaft portion 48 at its upper end. The cover shaft portion 48 supports the cover portion 47 in an openable/closable manner. The storage chamber 18 stores a hot-melt adhesive (not shown) inside the body portion 46. The stored adhesive may be supplied from the storage chamber 18 to the gear pump 124 (see Figs. 5 and 6) and to the nozzle 17 as needed. The hot-melt adhesive melts when heated to a predetermined temperature, and solidifies at a temperature below the predetermined temperature.

As shown in Fig. 2, the beam portion 19 includes a body portion 51, a spring support portion 53, and a column portion 52. The body portion 51 is a member extending horizontally leftward from the rear left end of the arm portion 13. The length of the body portion 51 in the right-and-left direction is about one third of the length of the bed portion 11 in the right-and-left direction. The spring support portion 53 has a plate shape and extends horizontally forward from the left end portion of the body portion 51. The length of the spring support portion 53 in the back-and-forth direction is about half the length of the bed portion 11 in the back-and-forth direction. As shown in Figs. 2 and 4, the column portion 52 extends obliquely downward from the body portion 51 at about 45 degrees relative to the horizontal plane. There is a gap between the lower end of the column portion 52 and the bed portion 11.

As shown in Fig. 2, the spring support portion 53 has a hole at the front end portion. The spring support portion 53 supports a shaft portion 61 in a vertically movable manner. The shaft portion 61 is inserted through the spring 21. The upper end part of the shaft portion 61 is inserted into the hole of the spring support portion 53. The column portion 52 has a shaft portion 62 extending horizontally leftward from the lower end part thereof. The shaft portion 62 supports a rear end portion 56 of a roller holding portion 20. The roller holding portion 20 may swing a front end portion 58 in the vertical direction with the shaft portion 62 as the center of swing. The body portion 51 is provided with an air cylinder 24 at the right side of the spring support portion 53. The air cylinder 24 is directed for switching the position of the support portion 16.

The roller holding portion 20 will be described. The front end portion 58 of the roller holding portion 20 rotatably supports the upper feed roller 22 having a cylindrical shape. The upper feed roller 22 is positioned near the back of the nozzle 17 that extends from the support portion 16. The nozzle 17 may preferably be within a distance, from the center of rotation of the upper feed roller 22, for example, of twice larger than the diameter of the upper feed roller 22. The roller holding portion 20 includes a shaft support portion 59 on the upper face at a slightly forward position from the center. The shaft support portion 59 supports the lower end of the shaft portion 61 inserted through the spring 21. The spring 21 is interposed between the spring support portion 53 and the lower end of the shaft portion 61. The spring 21 urges the shaft portion 61 downwards, thereby urging the roller holding portion 20 connected to the shaft portion 61 downwards.

As shown in Fig. 2, the bed portion 11 is provided with a hole 23 below the upper feed roller 22. A part of the lower feed roller 25 (see Fig. 6) slightly projects upwards from the hole 23. The lower feed roller 25 rotates along with the upper feed roller 22. The lower feed roller 25 and the upper feed roller 22 feed the cloths sandwiched therebetween from front to back.

Positions of the nozzle 17 when moved will be described with reference to Fig. 4 and Fig. 5.

As shown in Fig. 4, when the movable portion 75 is moved forward, the support portion 16 stands upright. The nozzle 17 moves to near and in front of the upper feed roller 22. The discharge port 86 (see Fig. 8) faces downwards. The adhesive discharged from the nozzle 17 adheres onto the lower cloth passing below the nozzle 17. The upper feed roller 22 and the lower feed roller 25 (see Fig. 6) press the cloths from above and below immediately after the adhesive has been applied on the lower cloth. The upper feed roller 22 and the lower feed roller 25 (see Fig. 6) rotate and feed the cloths from front to back. The position of the support portion 16 shown in Fig. 4 will be hereinafter referred to as a use position.

As shown in Fig. 5, when the movable portion 75 moves backwards, the support portion 16 is tilted diagonally down and forward. The nozzle 17 moves to a position away from the upper feed roller 22 and the bed portion 11. The discharge port 86 (see Fig. 8) faces diagonally down and forward. The position of the support portion 16 shown in Fig. 5 will be hereinafter referred to as a maintenance position.

The inner configuration of the bonding machine 2 will be described below with reference to Fig. 6. As shown in Fig. 6, the bonding machine 2 includes therein the first motor 91, the second motor 92, the third motor 93, and the like.

The first motor 91 transmits a rotation drive force to the gear pump 124 via a rotary shaft 121 thereby driving the gear pump 124. The gear pump 124 includes a drive gear 122 and a driven gear (idler gear) 123. The drive gear 122 is fixed at the left end of the rotary shaft 121. Accordingly, the drive gear 122 rotates along with the rotary shaft 121. The driven gear 123 meshes with the drive gear 122. The first motor 91 is positioned inside the arm portion 13 and to the right side of the portion where the pump casing 14 is connected to the arm portion 13. The rotary shaft 121 extends inside the pump casing 14 leftward from the rotary shaft of the first motor 91. The drive gear 122 and the driven gear 123 supply an appropriate amount of the adhesive to the nozzle 17.

The second motor 92 transmits a rotation drive force to the upper feed roller 22 via the rotary shafts 126, 127, 128 and belts 129, 130 thereby driving the upper feed roller 22. The second motor 92 is positioned inside the arm portion 13 and to the right side of the portion where the beam portion 19 is connected with the arm portion 13. The rotary shaft 126 extends leftward from the rotary shaft of the second motor 92 and extends through the body portion 51. The left end of the rotary shaft 126 is positioned inside the column portion 52. The left end of the rotary shaft 126 supports a pulley. The right end of the rotary shaft 127 is positioned inside the lower end of the column portion 52 and the left end of the rotary shaft 127 is positioned inside the rear end portion 56 of the roller holding portion 20. The right end and left end of the rotary shaft 127 each support a pulley. The rotary shaft 128 is a rotary shaft of the upper feed roller 22. The left end of the rotary shaft 128 is positioned inside the front end portion 58 of the roller holding portion 20 and supports a pulley. The right end of the rotary shaft 128 projects from the front end portion 58 and supports the upper feed roller 22. The belt 129 is crossed between the pulley at the left end of the rotary shaft 126 and the pulley at the right end of the rotary shaft 127 inside the column portion 52. The belt 130 is crossed between the pulley at the left end of the rotary shaft 127 and the pulley at the left end of the rotary shaft 128 inside the roller holding portion 20. The upper feed roller 22 rotates along with the rotation of the second motor 92.

The third motor 93 transmits a rotation drive force to the lower feed roller 25 via a rotary shaft 141 and a belt 142 thereby driving the lower feed roller 25. The lower feed roller 25 is cylindrical and is fixed to the rotary shaft 141. The lower feed roller 25 is positioned below the upper feed roller 22 and inside the bed portion 11. The bed portion 11 has a support bed 4 therein. The support bed 4 rotatably supports the rotary shaft 141. The belt 142 is crossed between a pulley of a rotary shaft of the third motor 93 and a pulley at the right end of the rotary shaft 141 inside the bed portion 11. The lower feed roller 25 rotates along with the rotation of the third motor 93.

A first encoder 94 is connected to the right end of the first motor 91. The first encoder 94 detects a rotation amount of the first motor 91. A second encoder 95 is connected to the right end of the second motor 92. The second encoder 95 detects a rotation amount of the second motor 92. A third encoder 96 is connected to the right end of the third motor 93. The third encoder 96 detects a rotation amount of the third motor 93.

The body portion 46 of the storage chamber 18 includes a first storage chamber heater 101, a second storage chamber heater 102, and a storage chamber temperature sensor 111 in its peripheral wall. The first storage chamber heater 101 and the second storage chamber heater 102 heat the body portion 46 to heat the adhesive stored in the body portion 46. The storage chamber temperature sensor 111 detects a temperature of the body portion 46 to measure a temperature of the adhesive stored in the body portion 46. The bonding machine 2 uses the first storage chamber heater 101, the second storage chamber heater 102, and the storage chamber temperature sensor 111 to heat the hot-melt adhesive in the storage chamber 18 to a predetermined temperature to liquefy the adhesive.

The first pump casing 31 of the pump casing 14 includes a pump casing heater 103 and a pump temperature sensor 112 therein. The pump casing heater 103 heats the first pump casing 31 to heat the adhesive flowing inside the first pump casing 31. The pump temperature sensor 112 measures the temperature of the first pump casing 31.

The support portion 16 includes a support portion heater 104 and a support portion temperature sensor 113 inside. The support portion heater 104 heats the support portion 16 to heat the adhesive flowing inside the support portion 16. The support portion temperature sensor 113 measures the temperature of the support portion 16.

The channels for the adhesive in the bonding machine 2 will be described with reference to Figs. 7 and 8.

As shown in Fig. 7, the body portion 46 of the storage chamber 18 has a peripheral wall and a bottom wall. The body portion 46 stores an adhesive within a space enclosed by the peripheral wall and the bottom wall. The channel 81 is a through hole extending toward the pump casing 14 at the lower end of the peripheral wall of the pump casing 14 side. The channel 81 is a channel for leading the adhesive stored in the body portion 46 to the gear pump 124.

The channel 81 extends from the storage chamber 18 to the center of the first pump casing 31 of the pump casing 14. The channel 81 bends rightward at a right angle at the center of the first pump casing 31 and reaches a position above where the drive gear 122 and the driven gear 123 intermesh with each other.

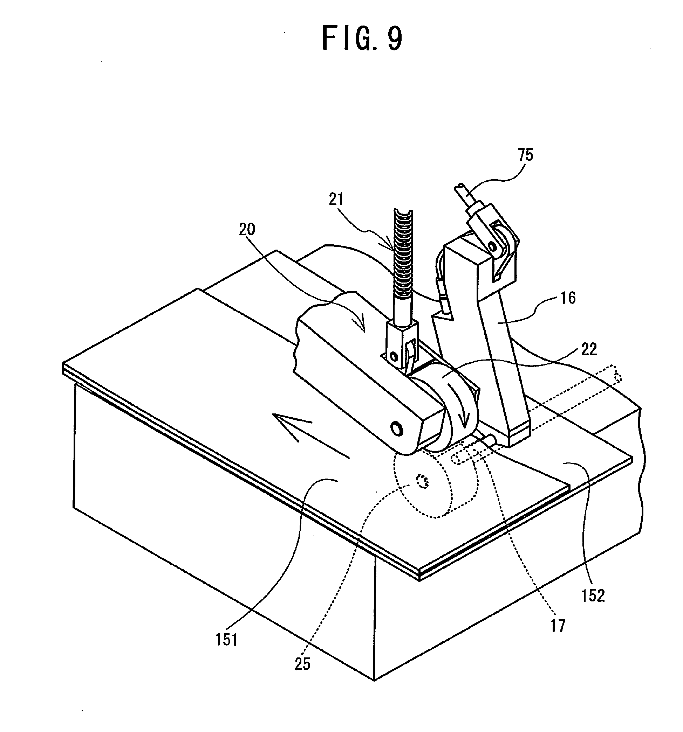

As shown in Fig. 8, the channel 82 is a channel for leading the adhesive that has passed through the gear pump 124 to the channel 83 in the support portion 16. The channel 82 extends leftward from a position below where the drive gear 122 and the driven gear 123 (see Fig. 9) intermesh with each other. The channel 82 extending leftward bends downward, bends leftward at its lower end, passes through the shaft portion 45 to connect to the channel 83 inside the support portion 16.

The channel 83 is a channel for leading the adhesive that has flowed through the channel 82 to the nozzle 17. The channel 83 extends inside the support portion 16 from the upper end portion 42 to the lower end portion 44 to connect to a channel 84 inside the nozzle 17.

The channel 84 is a channel for leading the adhesive that has flowed through the channel 83 to the discharge port 86. The discharge port 86 is provided at the lower part of the left end of the nozzle 17. The channel 84 extends inside the nozzle 17 from the right end to the left end to connect to the discharge port 86. The adhesive is discharged out of the discharge port 86.

The flow of the adhesive from the storage chamber 18 through the pump casing 14 and the support portion 16 to the discharge port 86 of the nozzle 17 will be described with reference to Fig. 7 and Fig. 8. The first storage chamber heater 101 (see Fig. 6) and the second storage chamber heater 102 (see Fig. 6) heat the adhesive inside the storage chamber 18. The adhesive transforms into a liquid state.

The first motor 91 drives the drive gear 122 to rotate the drive gear 122 and the driven gear 123. The gear pump 124 pumps out the adhesive in the liquid state from the channel 81 into the channel 82. The pump casing heater 103 (see Fig. 6) heats the adhesive flowing though the channels 81 and 82. The adhesive remains in the liquid state.

The adhesive flows from the channel 82 into the channel 83 and reaches the channel 84, where the adhesive is discharged to the outside from the discharge port 86. The support portion heater 104 (see Fig. 6) heats the adhesive flowing through the channel 83. The adhesive is discharged in the liquid state to the outside from the discharge port 86.

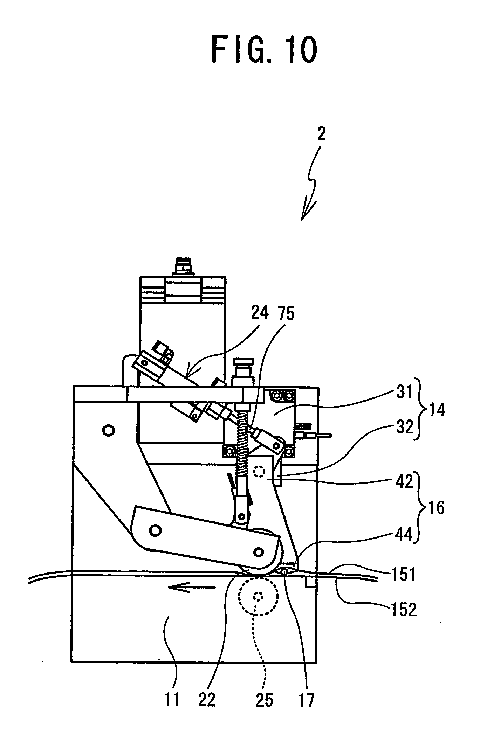

The operation of the bonding machine 2 during the bonding work will be described with reference to Fig. 9 and Fig. 10, using an example where an upper cloth 151 and a lower cloth 152 are bonded with each other.

As shown in Fig. 9 and Fig. 10, when performing the bonding work, the bonding machine 2 moves the movable portion 75 of the air cylinder 24 forward to move the support portion 16 to the use position. The worker places the upper cloth 151 and the lower cloth 152 in a stacked manner and places the nozzle 17 at a portion where the cloths are bonded. The upper feed roller 22 and the lower feed roller 25 sandwich the upper cloth 151 and the lower cloth 152 behind the nozzle 17.

Under the state described above, when the worker steps on and presses down the pedal 208 (see Fig. 1), the gear pump 124 (see Fig. 7) is driven. As a result, the adhesive is supplied through the channels 81 to 83, discharged from the nozzle 17, and adheres onto the lower cloth 152. As shown in Fig. 10, the upper feed roller 22 and the lower feed roller 25 rotate in a direction to feed the upper cloth 151 and the lower cloth 152 from front to back. The spring 21 urges the upper feed roller 22 downwards. Therefore, the upper feed roller 22 and the lower feed roller 25 press and bond the upper cloth 151 and the lower cloth 152 together.

The electrical configuration of the cloth bonding apparatus 1 will be described with reference to Fig. 11.

The cloth bonding apparatus 1 includes a CPU 201, a ROM 202, a RAM 203, and a storage device 29. The CPU 201 performs reception processing and control processing. The reception processing is a processing for receiving input information from the keys 209, the pedal 208, and the like. The reception processing is also a processing for receiving information detected by the various sensors. The control processing is a processing for controlling the motors, the heaters, and the like. The ROM 202 stores programs to be executed by the CPU 201 and various default parameters and the like. The RAM 203 temporarily stores timers, counters, flags, and the like. The storage device 29 stores various settings information inputted by the worker. The CPU 201 is electrically connected respectively to the ROM 202, the RAM 203, and the storage device 29. The CPU 201 can access storage areas of the ROM 202, the RAM 203, and the storage device 29.

The pedal 208 is electrically connected with the CPU 201. The worker may use the pedal 208 to adjust a feed speed of the cloths. The CPU 201 recognizes an amount by which the pedal 208 is pressed down by the foot of the worker. The CPU 201 determines rotation speeds of the upper feed roller 22 and the lower feed roller 25, and rotation speeds of the drive gear 122 and the driven gear 123, on the basis of the recognized pressed amount of the pedal 208.

The keys 209 are electrically connected with the CPU 201. The worker may use the keys 209 to enter various operation settings. The CPU 201 recognizes the press state of the keys 209 operated by the worker. The CPU 201 stores the information on various operation settings in the storage device 29 on the basis of the recognized press state of the keys 209.

The position sensor 222 is electrically connected with the CPU 201. The CPU 201 recognizes information on the position of the piston detected by the position sensor 222.

The temperature sensors 111 to 113 are respectively electrically connected to the CPU 201. The CPU 201 recognizes information on the temperatures detected by the temperature sensors 111 to 113. The CPU 201 recognizes the temperatures of the adhesive flowing inside the storage chamber 18, the pump casing 14, and the support portion 16, based on the information on the temperatures detected by the temperature sensors 111 to 113.

The encoders 94 to 96 each are electrically connected with the CPU 201. The CPU 201 recognizes the information on the rotation amounts respectively detected by the encoders 94 to 96. The CPU 201 recognizes actual rotation speeds of the motors 91 to 93 on the basis of the information on the rotation amounts detected by the encoders 94 to 96, respectively.

A display driver 205 is electrically connected with the CPU 201. The LCD portion 207 is electrically connected with the display driver 205. The CPU 201 displays desired information on the LCD portion 207 via the display driver 205.

An air driver 204 is electrically connected with the CPU 201. The air cylinder 24 is electrically connected with the air driver 204. The CPU 201 controls a pressure of the air to be fed into the air cylinder 24 through the air inlets 71 and 74 via the air driver 204. The support portion 16 moves to the use position or to the maintenance position on the basis of the operation of the air cylinder 24.

A motor driver 206 is electrically connected with the CPU 201. The motors 91 to 93 each are electrically connected with the motor driver 206. The CPU 201 controls the motors 91 to 93 via the motor driver 206.

The heaters 101 to 104 are respectively electrically connected to the CPU 201. The CPU 201 controls ON/OFF of each of the heaters 101 to 104.

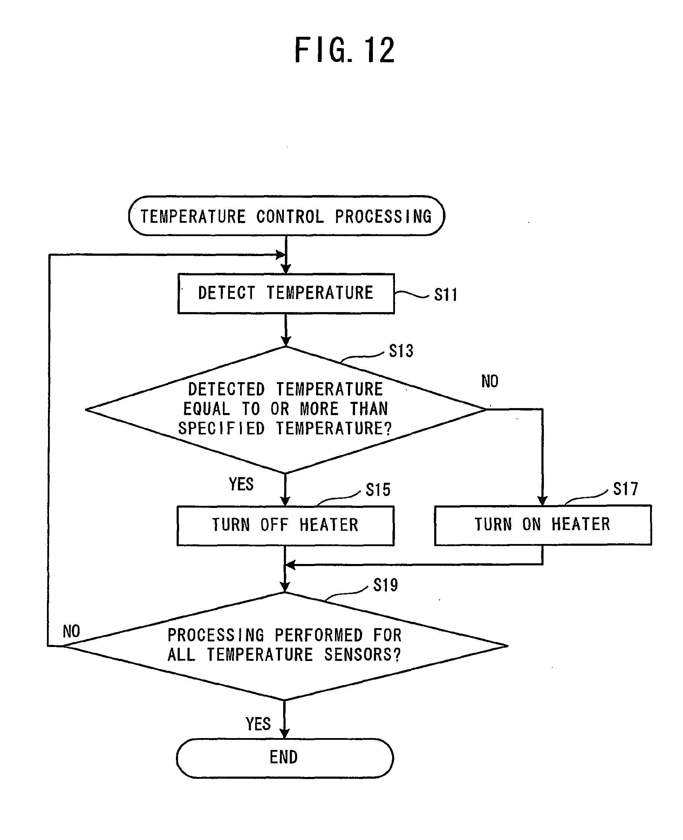

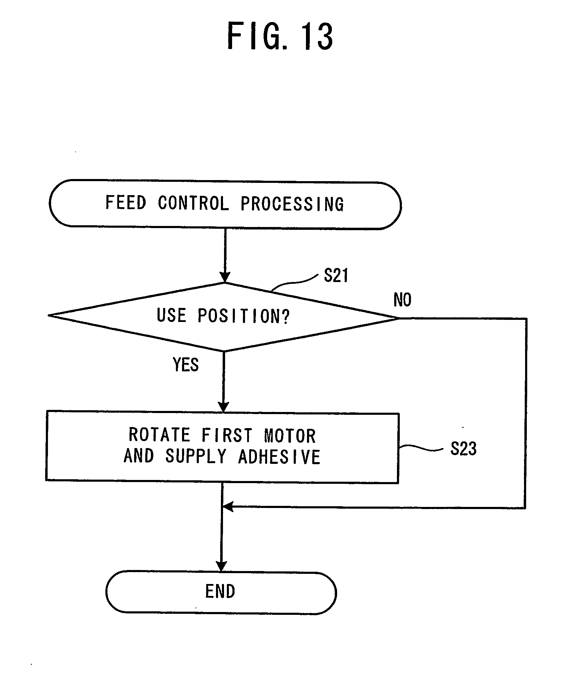

Various processing of the cloth bonding apparatus 1 will be described with reference to Figs. 12 and 13. The CPU 201 performs the temperature control processing at a predetermined cycle (of, for example, two seconds). The CPU 201 performs the supply control processing when the worker steps on and presses down the pedal 208 in a state where the apparatus is capable of performing the cloth bonding operation.

The temperature control processing will be described with reference to Fig. 12. The temperature control processing is directed for controlling ON/OFF of the heaters 101 to 104 based on the information on the temperatures detected by the temperature sensors 111 to 113. Through the temperature control processing, the cloth bonding apparatus 1 heats the adhesive to turn the adhesive into the liquid state and keep the temperature of the adhesive equal to or higher than a predetermined temperature.

As shown in Fig. 12, the CPU 201 obtains information on the temperature detected by any one of the temperature sensors 111 to 113 (S11). If the obtained temperature is equal to or more than a predetermined value (of, for example, 100□C) (S13: YES), the adhesive is in the liquid state. The CPU 201 turns off the heater of the part that includes the temperature sensor that has detected the temperature (S15). The CPU 201 then moves on to processing of step S19. If the obtained temperature is lower than the predetermined value (of, for example, 100□C) (S13: NO), the adhesive may cool down and transform into the solid state. Accordingly, the CPU 201 turns on the heater of the part that includes the temperature sensor that has detected the temperature (S17). The CPU 201 then moves on to processing of step S19.

At step S19, the CPU 201 determines whether the above-described processing has been performed for all of the temperature sensors 111 to 113 (S19). If there is any temperature sensor left for which the above-described processing has not been performed yet (S19: NO), the CPU 201 goes back to the processing at step S11. The CPU 201 then performs again the above-described processing for the unprocessed temperature sensor. The CPU 201 ends the temperature control processing if the CPU 201 has performed the above-described processing for all of the temperature sensors 111 to 113 (S19: YES).

The supply control processing will be descried with reference to Fig. 13. In the supply control processing, the CPU 201 permits a discharge of the adhesive only when the support portion 16 is at the use position, and does not permit the discharge of the adhesive when the support portion 16 is at the maintenance position. Through the supply control processing, the cloth bonding apparatus 1 prevents the heated adhesive from being discharged toward the worker.

As shown in Fig. 13, the CPU 201 recognizes the position of the movable portion 75 of the air cylinder 24 based on the signal detected from the position sensor 222. In a case where the movable portion 75 has moved forward, the CPU 201 determines that the support portion 16 is at the use position (S21: YES). In such a case, the adhesive discharged from the discharge port 86 will not adhere on the worker. Accordingly, the CPU 201 executes control to rotate the first motor 91. The first motor 91 drives the drive gear 122 (S23), so that the gear pump 124 supplies the adhesive to the nozzle 17. The adhesive is discharged from the discharge port 86 and adheres onto the cloth. Thereafter, the CPU 201 ends the supply control processing.

In a case where the movable portion 75 has moved backwards, the CPU 201 determines that the support portion 16 is at the maintenance position (S21: NO). In such a case, the worker may be performing the maintenance work, looking at the nozzle 17 to check its condition. Accordingly, the CPU 201 prohibits the rotation of the first motor 91. Thus, the gear pump 124 does not supply the adhesive to the nozzle 17. The CPU 201 then ends the supply control processing.

As described above, in the cloth bonding apparatus 1, the nozzle 17 is positioned near the upper feed roller 22 on the upstream side of the cloth feed direction. The cloth bonding apparatus 1 can reliably press and feed the cloths between which the adhesive has been applied with the upper feed roller 22 and the lower feed roller 25 so as to bond the cloths together with the adhesive. Unlike cloths sewn together with a thread, the surfaces of the bonded cloths have no unevenness, which may be formed by the thread. Therefore, the bonded cloths have smooth surfaces.

The nozzle 17 extends horizontally leftward from the lower end portion 44 of the support portion 16, along the surface of the lower cloth. A slight gap is formed between the lower end portion 44 of the support portion 16 and the bed portion 11. The nozzle 17 therefore may not restrict movement of the cloth passing in the back-and-forth direction.

The spring 21 urges the roller holding portion 20 downwards. The position of the upper feed roller 22 in the vertical direction changes in accordance with a change in a thickness of the cloths. The worker therefore may not need to adjust the position of the upper feed roller 22 even when the thickness of the cloth has changed.

The storage chamber 18 stores the adhesive. The worker may not need to frequently supply the adhesive to the cloth bonding apparatus 1 from outside.

The heater 101 and the heater 102 heat the adhesive stored in the storage chamber 18 to transform the adhesive into the liquid state. The cloth bonding apparatus 1 is therefore capable of bonding cloth using a hot-melt adhesive. Since the cloth bonding apparatus 1 stores the liquefied adhesive in the storage chamber 18, time required before the bonding operation can be started may be reduced. The hot-melt adhesive easily solidifies soon after the adhesive is applied on the cloth. Consequently, the cloth bonding apparatus 1 may reduce time for the adhesive to set and thus increase productivity.

The gear pump 124 supplies an adequate amount of the adhesive from the storage chamber 18 to the nozzle 17. The cloth bonding apparatus 1 can apply a most suitable amount of the adhesive on the cloth in accordance with a material or a feed speed of the cloth.

The cloth bonding apparatus 1 is capable of readily supplying the adhesive stored in the storage chamber 18 to the nozzle 17 through the channels 81 to 84. The heaters 103 and 104 can prevent the adhesive that has liquefied in the storage chamber 18 from cooling down and solidifying in the channels.

The cloth bonding apparatus 1 controls ON/OFF of the heaters 101 to 104 based on the temperatures detected by the temperature sensors 111 to 113. The cloth bonding apparatus 1 performs heating that may be necessary only for the purpose of maintaining the adhesive in the liquid state, and does not perform excessive heating. The cloth bonding apparatus 1 therefore can keep the power necessary for the heating low.

When the support portion 16 is at the maintenance position, the discharge port 86 faces diagonally down and forward. Therefore, the worker can easily check a clogging in the discharge port 86.

The cloth bonding apparatus 1 can perform the cloth bonding operation in a state where the support portion 16 and the nozzle 17 are at the use position. On the other hand, the cloth bonding apparatus 1 does not discharge the adhesive from the nozzle 17 in a state where the support portion 16 and the nozzle 17 are at the maintenance position. The cloth bonding apparatus 1 therefore does not discharge the heated adhesive toward the worker when the worker is carrying out the maintenance work on the nozzle 17, with the support portion 16 being at the maintenance position.

The upper feed roller 22 in Fig. 2 and the lower feed roller 25 in Fig. 6 correspond to the feeding portion of the present invention. The pump casing heater 103 and the support portion heater 104 in Fig. 6 correspond to the first heating portion of the present invention. The first storage chamber heater 101 and the second storage chamber heater 102 in Fig. 6 correspond to the second heating portion of the present invention. The air cylinder 24 in Fig. 2 corresponds to the moving portion of the present invention. The CPU 201 that performs the processing of steps S15 and S17 in Fig. 12 corresponds to the temperature controlling portion of the present invention. The position sensor 222 in Fig. 11 corresponds to the position detecting portion of the present invention. The gear pump 124 in Fig. 6 corresponds to the supplying portion of the present invention. The CPU 201 that performs the processing for controlling the rotation of the first motor 91 in Fig. 13 corresponds to the supply controlling portion of the present invention.

The present invention is not limited to the above-described embodiment and may be modified in various ways within the scope of the claims. In the above-described embodiment, the cloth bonding apparatus 1 determines whether the adhesive may be discharged based on the position of the support portion 16. The present invention is not limited to this method. Hereinafter, a modified embodiment of the present invention will be described.

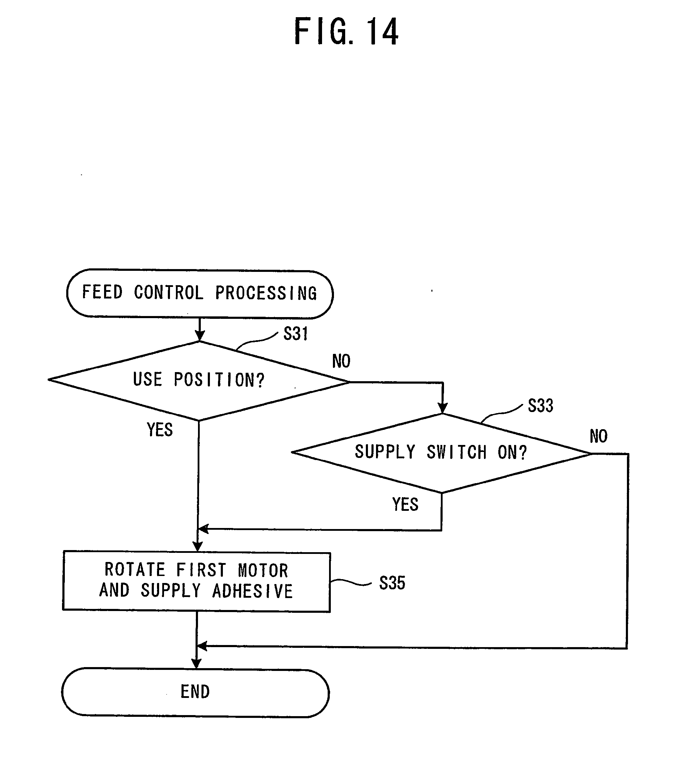

The supply control processing in the modified embodiment of the present invention will be described with reference to Fig. 14. The CPU 201 performs the supply control processing according to the modified embodiment when the worker steps on and presses down the pedal 208 in a state where the apparatus is capable of performing the cloth bonding operation.

The worker sets whether the discharge of the adhesive from the nozzle 17 should be allowed or prohibited beforehand by controlling the ON/OFF of a supply switch, which is one of the keys 209. The cloth bonding apparatus 1 permits the discharge of the adhesive when the supply is ON, even if the support portion 16 is at the maintenance position.

As shown in Fig. 14, the CPU 201 recognizes the position of the movable portion 75 of the air cylinder 24 based on the signal detected from the position sensor 222. The CPU 201 determines that the support portion 16 is at the use position if the movable portion 75 has moved forward (S31: YES). The CPU 201 executes control to rotate the first motor 91. The first motor 91 drives the drive gear 122 (S35), so that the adhesive is discharged from the discharge port 86. The adhesive adheres onto the cloth. Thereafter, the CPU 201 ends the supply control processing.

The CPU 201 determines that the support portion 16 is at the maintenance position if the movable portion 75 has moved backwards (S31: NO). The CPU 201 determines whether the supply switch is ON (S33). If the supply switch is ON (S33: YES), the CPU 201 executes control to rotate the first motor 91. The first motor 91 drives the drive gear 122 (S35), so that the adhesive is discharged from the discharge port 86 and adheres onto the cloth. Thereafter, the CPU 201 ends the supply control processing. If the supply switch is OFF (S33: NO), the CPU 201 prohibits the rotation of the first motor 91. Therefore, the gear pump 124 does not supply the adhesive to the nozzle 17.
The CPU 201 then ends the supply control processing.

As described above, in the supply control processing in the modified embodiment, the cloth bonding apparatus 1 executes control to rotate the first motor 91 irrespective of the position of the support portion 16, if the supply switch is ON. Then, the adhesive is discharged from the nozzle 17. The cloth bonding apparatus 1 is therefore capable of purging, with the support portion 16 being in the maintenance position. Purging means a forcible discharge of the adhesive for the purpose of securing a flow of the adhesive.

The supply switch, which is one of the keys 209 in Fig. 11, corresponds to the permitting portion of the present invention.

The present invention is not limited to the above-described embodiment and modified embodiment and may be further modified in various ways within the scope of the claims. In the previously described embodiment, the longitudinal direction of the support portion 16 corresponds to the vertical direction. The longitudinal direction of the support portion 16, however, may be the right-and-left direction, and the pillar portion 12 may support the support portion 16.

In the above-described embodiment, the nozzle 17 swings in the vertical direction. The nozzle 17, however, may horizontally move in the back-and-forth direction. The worker can easily perform the maintenance work on the nozzle 17 by moving the nozzle 17 forward to a position where the bed portion 11 is not below the nozzle 17.

In the above-described embodiment, the gear pump 124 supplies or stops the supply of a suitable amount of the adhesive to the nozzle 17. It is not, however, limited to the gear pump 124 that effects supplying or stopping the supply of the adhesive. For example, any of the channels may include a valve. The supplying or stopping the supply of the adhesive may be controlled by opening and closing of the valve. Alternatively, the supply of the adhesive may be achieved using air pressure.

Examples in which the cloth bonding apparatus bonds separate pieces of cloths together are given in the above-described embodiment and the modified embodiment. However, the cloth bonding apparatus may bond folded portions of one folded cloth. In other words, the cloth bonding apparatus may bond two layers of cloth(s).

## Claims

1. A cloth bonding apparatus (1), comprising:
a nozzle (17) that has a discharge port (86) from which an adhesive is dischargeable onto a first layer of cloth;
a feeding portion (22, 25) adapted to press and feed the first layer of cloth with a second layer of cloth in a direction intersecting with a direction in which the adhesive is discharged from the nozzle (17);
a channel (81, 82, 83, 84) through which the adhesive can be supplied to the nozzle (17);
a first heating portion (103, 104) that heats the channel (81, 82, 83, 84); and
a temperature controlling portion (201) that controls a heating temperature of the first heating portion (103, 104), **characterized by**
a moving portion (24) that moves the nozzle (17) between a use position and a maintenance position, the use position is nearer to the feeding portion (22, 25) than the maintenance position;
a supplying portion (124) adapted to supply the adhesive to the channel (81, 82, 83, 84);
a supply controlling portion (201) that controls a drive of the supplying portion (124); and
a position detecting portion (222) that detects a position of the nozzle (17),
wherein the supply controlling portion (201) controls the supplying portion (124) to stop a supply of the adhesive if the position detecting portion (222) has detected that the nozzle (17) is at the maintenance position, and controls the supplying portion (124) to permit the supply of the adhesive if the position detecting portion (222) has detected that the nozzle (17) is at the use position.

2. The cloth bonding apparatus (1) according to claim 1, further comprising a storage chamber (18) adapted to store the adhesive to be supplied to the channel (81, 82, 83, 84).

3. The cloth bonding apparatus (1) according to claim 2, further comprising a second heating portion (101, 102) that heats the storage chamber (18),
wherein the temperature controlling portion (201) controls the heating temperature of the first heating portion (103, 104) and a heating temperature of the second heating portion (101, 102).

4. The cloth bonding apparatus (1) according to any one of claims 1 through 3, further comprising a temperature sensor (111, 112, 113) that is capable of detecting a temperature of the adhesive,
wherein the temperature controlling portion (201) controls the heating temperature of the first heating portion (103, 104) based on the temperature detected by the temperature sensor (111, 112, 113).

5. The cloth bonding apparatus (1) according to claim 3, further comprising a temperature sensor (111, 112, 113) that is capable of detecting a temperature of the adhesive,
wherein the temperature controlling portion (201) controls the heating temperature of the first heating portion (103, 104) and the heating temperature of the second heating portion (101, 102) based on the temperature detected by the temperature sensor (111, 112, 113).

6. The cloth bonding apparatus (1) according to any one of the preceding claims, wherein the discharge port (86) faces a worker in a state where the nozzle (17) has been moved to the maintenance position by the moving portion (24).

7. The cloth bonding apparatus (1) according to any one of claims 1 to 6, further comprising a permitting portion (209) that permits the supply of the adhesive by the supplying portion (124),
wherein the supply controlling portion (201) permits the supply of the adhesive by the supplying portion (124) if the permitting portion (209) has permitted the supply of the adhesive, even if the position detecting portion (222) has detected that the nozzle (17) is at the maintenance position.

8. The cloth bonding apparatus (1) according to any one of claims 1 through 7, wherein the nozzle (17) is positioned at the feeding portion (22, 25) on an upstream side with respect to the feeding portion (22, 25) in a feed direction in which the feeding portion (22, 25) feeds the first layer of cloth with the second layer of cloth.

9. The cloth bonding apparatus (1) according to any one of claims 1 through 8, wherein the nozzle (17) is adapted to extend along the first layer of cloth from a support portion (16) that includes the channel (81, 82, 83, 84).

## Patentansprüche

1. Tuchfügegerät (1), umfassend
eine Düse (17), die eine Ausgabeöffnung (86) aufweist, aus welcher ein Klebemittel auf eine erste Stoffschicht ausgegeben werden kann;
einen Vorschubabschnitt (22, 25), der angepasst ist, um die erste Stoffschicht mit einer zweiten Stoffschicht in einer Richtung zu Pressen und vorzuschieben, die sich mit einer Richtung kreuzt, in welcher das Klebemittel aus der Düse (17) ausgegeben wird;
einen Kanal (81, 82, 83, 84), durch welchen das Klebemittel der Düse (17) zugeführt werden kann;
einen ersten Heizabschnitt (103, 104), der den Kanal (81, 82, 83, 84) aufheizt; und
einen Temperatursteuerungsabschnitt (201), der eine Heiztemperatur des ersten Heizabschnittes (103, 104) steuert, **gekennzeichnet durch**
einen Bewegungsabschnitt (24), der die Düse (17) zwischen einer Verwendungsposition und einer Wartungsposition bewegt, wobei sich die Verwendungsposition näher als die Wartungsposition an dem Vorschubabschnitt (22, 25) befindet;
einen Zuführungsabschnitt (124), der angepasst ist, um dem Kanal (81, 82, 83, 84) das Klebemittel zuzuführen;
einen Zuführungssteuerungsabschnitt (201), der einen Antrieb des Zuführungsabschnittes (124) steuert; und
einen Positionerfassungsabschnitt (222), der eine Position der Düse (17) erfasst,
wobei der Zuführungssteuerungsabschnitt (201) den Zuführungsabschnitt (124) steuert, um eine Zuführung des Klebemittels zu stoppen, wenn der Positionserfassungsabschnitt (222) erfasst hat, dass sich die Düse (17) in der Wartungsposition befindet, und den Zuführungsabschnitt (124) steuert, um die Zuführung des Klebemittels zu erlauben, wenn der Positionserfassungsabschnitt (222) erfasst hat, dass sich die Düse (17) in der Verwendungsposition befindet.

2. Tuchfügegerät (1) nach Anspruch 1, ferner umfassend eine Lagerungskammer (18), die angepasst ist, um das Klebemittel, das dem Kanal (81, 82, 83, 84) zugeführt werden soll, zu lagern.

3. Tuchfügegerät (1) nach Anspruch 2, ferner umfassend einen zweiten Heizabschnitt (101, 102), der die Lagerungskammer (18) heizt,
wobei der Temperatursteuerungsabschnitt (201) die Heiztemperatur des ersten Heizabschnittes (103, 104) und eine Heiztemperatur des zweiten Heizabschnittes (101, 102) steuert.

4. Tuchfügegerät (1) nach einem der Ansprüche 1 bis 3, ferner umfassend einen Temperatursensor (111, 112, 113), der in der Lage ist, eine Temperatur des Klebemittels zu erfassen,
wobei der Temperatursteuerungsabschnitt (201) die Heiztemperatur des ersten Heizabschnittes (103, 104) auf der Basis der Temperatur steuert, die durch den Temperatursensor (111, 112, 113) erfasst wurde.

5. Tuchfügegerät (1) nach Anspruch 3, ferner umfassend einen Temperatursensor (111, 112, 113), der in der Lage ist, eine Temperatur des Klebemittels zu erfassen,
wobei der Temperatursteuerungsabschnitt (201) die Heiztemperatur des ersten Heizabschnittes (103, 104) und die Heiztemperatur des zweiten Heizabschnittes (101, 102) auf der Basis der Temperatur steuert, die durch den Temperatursensor (111, 112, 113) erfasst wurde.

6. Tuchfügegerät (1) nach einem der vorangehenden Ansprüche, wobei die Ausgabeöffnung (86) zu einem Arbeiter zeigt, in einem Zustand, in dem die Düse (17) durch den Bewegungsabschnitt (24) zur Wartungsposition bewegt wurde.

7. Tuchfügegerät (1) nach einem der Ansprüche 1 bis 6, ferner umfassend einen Zulassungsabschnitt (209), der die Zuführung des Klebemittels durch den Zuführungsabschnitt (124) zulässt,
wobei der Zuführungssteuerungsabschnitt (201) die Zuführung des Klebemittels durch den Zuführungsabschnitt (124) erlaubt, wenn der Zulassungsabschnitt (209) die Zuführung des Klebemittels erlaubt hat, selbst wenn der Positionserfassungsabschnitt (222) erfasst hat, dass sich die Düse (17) in der Wartungsposition befindet.

8. Tuchfügegerät (1) nach einem der Ansprüche 1 bis 7, wobei sich die Düse (17) an dem Vorschubabschnitt (22, 25) auf einer stromaufwärts gelegenen Seite bezüglich des Vorschubabschnittes (22, 25) in einer Vorschubrichtung befindet, in welcher der Vorschubabschnitt (22, 25) die erste Stoffschicht der zweiten Stoffschicht vorschiebt.

9. Tuchfügegerät (1) nach einem der Ansprüche 1 bis 8, wobei die Düse (17) angepasst ist, um sich entlang der ersten Stoffschicht von einem Unterstützungsabschnitt (16) zu erstrecken, der den Kanal (81, 82, 83, 84) umfasst.

## Revendications

1. Appareil (1) de liaison de tissus, comportant :
une buse (17) dotée d'un orifice (86) de refoulement à partir duquel un adhésif peut être refoulé sur une première couche de tissu ;
une partie (22, 25) d'avance prévue pour presser et faire avancer la première couche de tissu avec une deuxième couche de tissu dans une direction croisant une direction dans laquelle l'adhésif est refoulé de la buse (17) ;
un conduit (81, 82, 83, 84) à travers lequel l'adhésif peut être fourni à la buse (17) ;
une première partie (103, 104) de chauffage qui chauffe le conduit (81, 82, 83, 84) ; et
une partie (201) de régulation de température qui régule une température de chauffage de la première partie (103, 104) de chauffage,
**caractérisé par**
une partie (24) de déplacement qui déplace la buse (17) entre une position d'utilisation et une position de maintenance, la position d'utilisation étant plus proche de la partie (22, 25) d'avance que la position de maintenance ; une partie (124) d'alimentation prévue pour fournir l'adhésif au conduit (81, 82, 83, 84) ;
une partie (201) de régulation d'alimentation qui régule un entraînement de la partie (124) d'alimentation ; et
une partie (222) de détection de position qui détecte une position de la buse (17),
la partie (201) de régulation d'alimentation commandant la partie (124) d'alimentation de façon à arrêter une alimentation en adhésif si la partie (222) de détection de position a détecté que la buse (17) se trouve dans la position de maintenance, et commandant la partie (124) d'alimentation de façon à autoriser l'alimentation en adhésif si la partie (222) de détection de position a détecté que la buse (17) se trouve dans la position d'utilisation.

2. Appareil (1) de liaison de tissus selon la revendication 1, comportant en outre une chambre (18) de stockage prévue pour stocker l'adhésif à fournir au conduit (81, 82, 83, 84).

3. Appareil (1) de liaison de tissus selon la revendication 2, comportant en outre une deuxième partie (101, 102) de chauffage qui chauffe la chambre (18) de stockage,
la partie (201) de régulation de température régulant la température de chauffage de la première partie (103, 104) de chauffage et une température de chauffage de la deuxième partie (101, 102) de chauffage.

4. Appareil (1) de liaison de tissus selon l'une quelconque des revendications 1 à 3, comportant en outre un capteur (111, 112, 113) de température capable de détecter une température de l'adhésif,
la partie (201) de régulation de température régulant la température de chauffage de la première partie (103, 104) de chauffage d'après la température détectée par le capteur (111, 112, 113) de température.

5. Appareil (1) de liaison de tissus selon la revendication 3, comportant en outre un capteur (111, 112, 113) de température capable de détecter une température de l'adhésif,
la partie (201) de régulation de température régulant la température de chauffage de la première partie (103, 104) de chauffage et la température de chauffage de la deuxième partie (101, 102) de chauffage d'après la température détectée par le capteur (111, 112, 113) de température.

6. Appareil (1) de liaison de tissus selon l'une quelconque des revendications précédentes, l'orifice (86) de refoulement faisant face à un employé dans un état où la buse (17) a été amenée dans la position de maintenance par la partie (24) de déplacement.

7. Appareil (1) de liaison de tissus selon l'une quelconque des revendications 1 to 6, comportant en outre une partie (209) d'autorisation qui autorise l'alimentation en adhésif par la partie (124) d'alimentation,
la partie (201) de régulation d'alimentation autorisant l'alimentation en adhésif par la partie (124) d'alimentation si la partie (209) d'autorisation a autorisé l'alimentation en adhésif, même si la partie (222) de détection de position a détecté que la buse (17) se trouve dans la position de maintenance.

8. Appareil (1) de liaison de tissus selon l'une quelconque des revendications 1 à 7, la buse (17) étant positionnée au niveau de la partie (22, 25) d'avance d'un côté amont par rapport à la partie (22, 25) d'avance dans une direction d'avance dans laquelle la partie (22, 25) d'avance fait avancer la première couche de tissu avec la deuxième couche de tissu.

9. Appareil (1) de liaison de tissus selon l'une quelconque des revendications 1 à 8, la buse (17) étant prévue pour s'étendre le long de la première couche de tissu à partir d'une partie (16) de soutien qui comprend le conduit (81, 82, 83, 84).
